# EUROPEAN PATENT SPECIFICATION

(11) **EP 4 480 141 B1**
(45) Date of publication and mention of the grant of the patent: **25.11.2026**
(21) Application number: 22927503.7
(22) Date of filing: 15.02.2022
(51) Int. Cl.: H04L 12/14, H04L 15/00, H04M 15/00, H04W 4/24

(54) **METHOD AND APPARATUS FOR EDGE CHARGING CONTROL IN A COMMUNICATION NETWORK**
VERFAHREN UND VORRICHTUNG ZUR KANTENLADUNGSSTEUERUNG IN EINEM KOMMUNIKATIONSNETZ
PROCÉDÉ ET APPAREIL DE COMMANDE DE TAXATION EN PÉRIPHÉRIE DANS UN RÉSEAU DE COMMUNICATION

(43) Date of publication of application: 25.12.2024
(73) Proprietor: Telefonaktiebolaget LM Ericsson (publ), 164 83 Stockholm (SE)
(72) Inventor: TÖRNKVIST, Robert, 371 54 KARLSKRONA (SE)
(74) Representative: Ericsson
(86) International application number: PCT/SE2022/050165
(87) International publication number: WO 2023/158348

(56) References cited:
- WO-A1-2018/010780
- WO-A1-2021/045662
- US-A1- 2014 043 984
- US-A1- 2021 099 316
- US-A1- 2021 152 488
- HUAWEI TECHNOLOGIES: "pCR TR 28.815 Addition the eCHF for inter-provider based charging", 3GPP DRAFT; S5-215289, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. e-meeting; 20211011 - 20211020, 1 October 2021 (2021-10-01), Mobile Competence Centre ; 650, route des Lucioles ; F-06921 Sophia-Antipolis Cedex ; France, XP052065568
- "3rd Generation Partnership Project; Technical Specification Group Services and System Aspects; Usage monitoring control Policy and Charging Control (PCC) enhancement (Release 13)", 3GPP STANDARD; 3GPP TR 23.858, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.0.0, 19 March 2015 (2015-03-19), Mobile Competence Centre ; 650, route des Lucioles ; F-06921 Sophia-Antipolis Cedex ; France , pages 1 - 29, XP050927771
- NOKIA, NOKIA SHANGHAI BELL: "Introduction of a new key issue and solution", 3GPP DRAFT; S5-214085, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. e-meeting; 20210823 - 20210831, 10 August 2021 (2021-08-10), Mobile Competence Centre ; 650, route des Lucioles ; F-06921 Sophia-Antipolis Cedex ; France, XP052064621

## Description

### TECHNICAL FIELD

Methods and apparatus provide for granting and using group quotas, rather than individual quotas, wherein a granted group quota may be shared or divided by an edge Charging Function (eCHF) among individual user terminals among a group of affiliated user terminals.

### BACKGROUND

The Third Generation Partnership Project (3GPP) Technical Specification (TS) 32.290 V17.4.0 specifies a service-based architecture in which respective network functions (NFs) request charging from one or more Charging Functions (CHFs). A Converged Charging System (CCS) in this framework includes four main parts, with the CHF being one part. The CHF terminates the interface towards the requesting NF and interacts with the other parts of the CCS, which include: an Account Balance Management Function (ABMF) that holds subscribers' account balances and any reservations against those balances; a Rating Function (RF) that determines the value of the network resource usage; and a Charging Data Function (CDF) that is responsible for generating charging data records.

As a simple example of "online" charging, consider a user terminal associated with a subscriber account initiating use of a communication service in a Fifth Generation (5G) telecommunication network-see 3GPP TS 38.300 V16.8.0, TS 38.401 V16.8.0, and TS 38.410 V16.4.0 for 5G architectural details. A Charging Trigger Function (CTF) in a Session Management Function (SMF) or other NF sends a charging request to a CHF, requesting authorization for consumption of the communication service by the user terminal. The CTF may request a number of "service units," with each unit representing a quantum of service consumption, e.g., minutes, megabytes, etc.

The CHF sends a charging request towards an ABMF, which cooperates with a RF to determine the value of the requested number of service units. If the balance(s) or credit(s) in the associated subscriber account(s) is sufficient to cover the value, a quota is granted, with the size of the quota corresponding to the rated number of service units, and a corresponding charge reservation is recorded against the subscriber account(s). For policy or other reasons, the number of rated service units comprised in the granted quota may not be the same as the requested number. In any case, the CHF receives signaling indicating the granted quota and sends corresponding signaling towards the CTF that originated the request. For continuing services, like data connections, voice communications, etc., online charging includes initial and final charging requests, with any number of intermediate charging requests to cover ongoing consumption between initiation and termination of the service consumption.

Numerous challenges arise with respect to reducing or minimizing latencies associated with authorizing charging requests in cases where the communication services are "edge services", such as computing services provided to user terminals at an "edge location" of the network. As used herein, "edge location" refers to the point of connection of a user terminal, and an "edge service" refers to a service provided at or near the point of connection of a user terminal. For example, a user terminal connects to the network over a radio link with an access node of the network, and the access node connects directly or indirectly to a local server that provides computing services or data processing services or one or more other types of services, such that the user traffic associated with the edge services is routed and processed locally, rather than traversing into and through the overall network.

In other words, edge services provided by the Mobile Network Operator (MNO), or third parties are hosted at or close to the point-edge location-where user terminals attach to the telecommunication network. For example, certain user traffic may be broken out at a base station of the telecommunication network using "Local Breakout" (LBO) techniques and processed at the network edge where, or nearby to where, the base station is located, rather than traversing through the telecommunication network to reach one or more application service provider (ASP) servers for processing. "Nearby" in a network sense refers, for example, to the number of hops or intermediate routing points that are in the traffic flow going from/to the involved access node and the entity/entities that provide the edge service(s).

See clause 4.2 of 3GGP TS 23.501 V17.3.0 for reference architectures supporting edge computing in the 5G System (5GS) context. As a particular example, in the 5GS context, a radio access node (AN) provides wireless connectivity to user terminals that are within the signal coverage of the AN, with the AN coupling to a User Plane Function (UPF) that provides access to a local Data Network (DN) offering computing or other edge services to authorized user terminals that are connected to the 5GS via the AN. Here, the "edge location" refers to the AN as the point of connectivity into the 5GS. Also, see 3GPP TS 23.548 V17.1.0 for 5GS enhancements for edge computing, clause 4 in 3GPP TR 23.748

V17.0.0, regarding example edge support in the 5G Core (5GC), and 3GPP Technical Report (TR) 28.815 V17.0.0, regarding charging aspects of edge computing that are under study by the 3GPP.

Huawei Technologies: "pCR TR 28.815 Addition the eCHF for interprovider based charging", 3GPP Draft; S5-215289 discloses a proposed change request to 3GPP Technical Report 28.815 studying charging aspects of edge computing in telecommunications management. The document proposes adding an edge Charging Function (eCHF) architecture to support inter-provider based charging for edge computing services, including a hybrid charging architecture that introduces an eCHF as an intermediary between Network Functions with embedded Charging Trigger Functions and the traditional Charging Function.

3GPP TR 23.858 V13.0.0 discloses enhancements to the Policy and Charging Control (PCC) architecture for usage monitoring control. The document addresses issues related to usage monitoring in mobile networks, including scenarios where services need monitoring across multiple usage groups simultaneously, usage monitoring for subscriber groups including families or corporate subscribers sharing common allowances, and group-based usage monitoring with shared group limits.

US 2021/0099316 A1 discloses a quota management system for online charging in next generation networks, specifically focusing on Mobile Edge Computing (MEC) environments. The system addresses the challenge of managing service unit quotas when multiple edge applications provide MEC services for a single user session by implementing a virtual Charging Trigger Function within a MEC server that acts as a centralized quota manager.

### SUMMARY

Methods and apparatus provide for granting and using group quotas, rather than individual quotas, wherein a granted group quota may be shared or divided by an edge Charging Function (eCHF) among individual user terminals among a group of affiliated user terminals. For example, an eCHF sends a charging request for consumption of an edge service by one user terminal among a group of affiliated user terminals. A charging node responds to the request by granting a group quota shareable or dividable among the affiliated user terminals, rather than an individual quota. Correspondingly, the eCHF makes local grant decisions, such as by granting respective fractions of the granted group quota to two or more ones of the affiliated user terminals operating at the involved edge location.

One embodiment comprises a method of charging control for a communication network, where the method is performed by a node operative as an edge charging function (eCHF). The method includes the eCHF receiving a charging request from a Charging Trigger Function (CTF), requesting a quota for authorizing consumption by a first user terminal of an edge service provided by the communication network, the first user terminal being a member of a defined group of affiliated user terminals. The method further includes the eCHF sending a corresponding charging request towards a charging node associated with the communication network, and receiving a charging response from the charging node, the charging response indicating a granted group quota usable for authorizing consumption of the edge service by members of the defined group. Still further, the method includes the eCHF deciding, as a locally-granted quota, what fraction of the granted group quota to grant to the first user terminal, and sending a charging response to the CTF, indicating the locally-granted quota.

In another example embodiment, a node is operative as an eCHF for a communication network, where the node includes communication interface circuitry configured to send and receive messages, including charging requests and charging responses, and further includes processing circuitry that is operatively associated with the communication interface circuitry. The processing circuitry is configured to receive a charging request from a CTF, requesting a quota for authorizing consumption by a first user terminal of an edge service provided by the communication network, the first user terminal being a member of a defined group of affiliated user terminals. Further, the processing circuitry is configured to: send a corresponding charging request towards a charging node associated with the communication network; receive a charging response from the charging node, the charging response indicating a granted group quota usable for authorizing consumption of the edge service by members of the defined group; decide, as a locally-granted quota, what fraction of the granted group quota to grant to the first user terminal; and send a charging response to the CTF, indicating the locally-granted quota.

Another example embodiment comprises a method of charging control for a communication network, where the method is performed by a charging node associated with the communication network. The method includes the charging node: receiving a charging request originating from an eCHF, requesting a quota for authorizing consumption by a first user terminal of an edge service provided by the communication network, the first user terminal being a member of a defined group of affiliated user terminals; granting a group quota usable for authorizing consumption of the edge service by members of the defined group, wherein granting the group quota is performed responsive to the charging node determining that the eCHF is operative to decide locally-granted quotas from respective granted group quotas, for user terminals that are connected to the communication network at an edge location associated with the eCHF and are members of respective defined groups; and sending a charging response for the eCHF, indicating the granted group quota.

A further, related embodiment comprises a charging node configured for charging control for a communication network. The charging node includes communication interface circuitry configured to send and receive messages, including requests and responses related to charging, and processing circuitry that is operatively associated with the communication interface circuitry. The processing circuitry is configured to: receive a request originating from an eCHF, requesting a quota for authorizing consumption by a first user terminal of an edge service provided by the communication network, the first user terminal being a member of a defined group of affiliated user terminals; grant a group quota usable for authorizing consumption of the edge service by members of the defined group, wherein granting the group quota is performed responsive to the charging node determining that the eCHF is operative to decide locally-granted quotas from respective granted group quotas, for user terminals that are connected to the communication network at an edge location associated with the eCHF and are members of respective defined groups; and send a response intended for the eCHF, indicating the granted group quota.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 is a block diagram of a communication network, according to one embodiment.
Figure 2 is a block diagram of an arrangement for charging with respect to edge services, according to one embodiment.
Figures 3-5 are block diagrams of details for an edge Charging Function (eCHF), according to example embodiments.
Figure 6 is a logic flow diagram of a method of operation by an eCHF, according to one embodiment.
Figures 7-9 are block diagrams of details for a charging node, such as an Account Balance Management Function (ABMF), according to example embodiments.
Figure 10 is a logic flow diagram of a method of operation by a charging node, according to one embodiment.
Figures 11A-C are a signal flow diagram illustrating example signaling for authorizing and charging for edge services, according to one embodiment.

### DETAILED DESCRIPTION

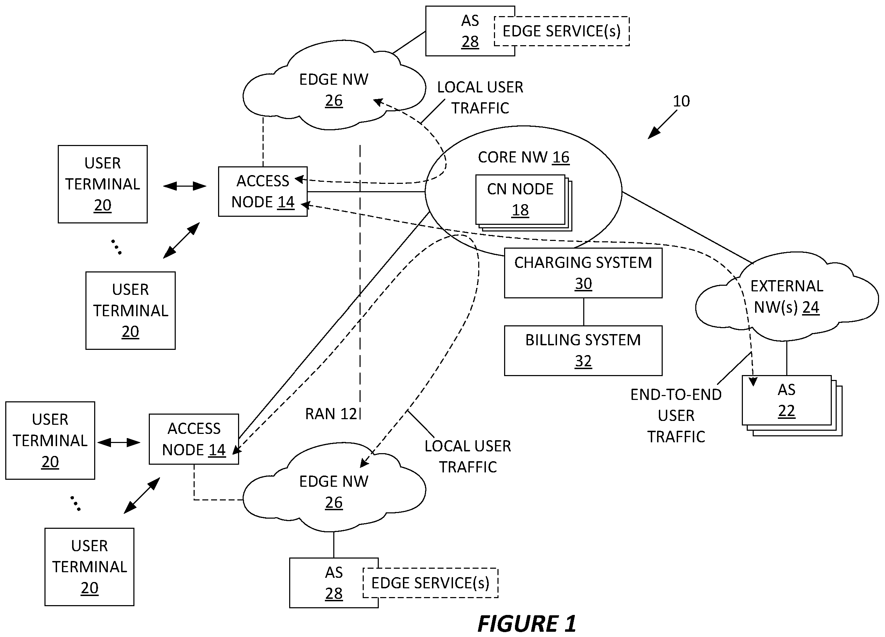

Figure 1 illustrates an example communication network 10, also referred to as a telecommunications network 10 or simply as the network 10. The network 10 includes a Radio Access Network (RAN) 12 comprising one or more access nodes (ANs) 14 that operate according to any one or more Radio Access Technologies (RATs). In implementations where the network 10 comprises a Third Generation Partnership Project (3GPP) network-i.e., a network operating according to 3GPP specifications-there may be a mix of 3GPP ANs and non-3GPP ANs, to provide radio access to the network 10.

A Core Network (CN) 16 comprising various CN nodes 18 is coupled with the RAN 12 and provides access control, mobility management, and traffic routing, for user terminals 20 that connect to the network 10 via radio links with respective ones of the access nodes 14. The CN nodes 18 provide, for example, access control, authentication, mobility management, and data routing functions to support respective user terminals 20 that connect to the network 10 for consumption-use-of one or more types of services provided by the network 10.

Here, "provided" means that the network 10 offers the service(s) directly, or gives access to such services, e.g., by acting as an "access network" that communicatively couples respective ones of the user terminals 20 with one or more Application Servers (ASs) 22 that are external to the network 10 and accessible via one or more networks 24 that are external to the network 10. For example, the network 10 provides IP-based routing of user traffic flowing between given ones of the user terminals 20 and given ASs 22 that are accessible via the Internet, where the Internet is an example external network to which the CN 16 couples.

Example services include voice services, such as Voice-over-IP (VoIP) services, push-to-talk services, data services, mobile broadband (MBB) services, such as for media streaming, video conferencing, social networking, etc. Additional service examples include Machine-Type-Communication (MTC) services in Machine-to-Machine (M2M) contexts, Internet-of-Things (IoT) services, vehicle-to-vehicle (V2V) and vehicle-to-everything (V2X) services, computing or data processing services, data storage services, etc.

In this regard, the various ones of the user terminals 20 may be of different types and have different capabilities and serve different purposes. Thus, different ones of the user terminals 20 may use different ones among the various services provided by the network 10. "Edge services" are of particular interest herein, wherein the term "edge service" does not necessarily connote a specific type of service and instead connotes where or how that service is provided by the network 10.

Figure 1 illustrates respective edge networks 26 that are functionally local to the respective access nodes 14. Local means nearby in terms of the number of routing hops or intermediate nodes, and the edge networks 26 may be internal to the network 10 or may be accessible via a local connection. For example, user traffic associated with an edge service may traverse only a limited portion of the network 10, going from a user terminal 20 through an AN 14 to a User Plane Function (UPF) of other traffic-handling node in the CN 16, where it is looped back or broken out for delivery to a local edge network 26, which may contain or comprise an AS 28 that provides the involved edge service(s).

The edge networks 26 may be referred to as "data networks" (DNs). These DNs may also be reachable via the external network(s) 24 and the ASs 28 may be the same as the ASs 22 or affiliated with the ASs 22, with the difference being that user traffic handled in an edge network 26-i.e., at an edge location associated with a respective AN 14-does not have to traverse through the network 10 in any end-to-end sense. See the "END-TO-END USER TRAFFIC" depiction in the diagram. Instead, using Local Breakout (LBO) or other mechanisms, user traffic handled at the edge location traverses a shorter path, e.g., from the AN 14 to UPF node or other traffic-handling node in the CN 16, which is nearby the access node 14. See the "LOCAL USER TRAFFIC" depiction in the diagram.

In an example scenario, a user terminal 20 uses the network 10 to contact an AS 22 reachable via the external network(s) 24, with the AS 22 or some related node communicating with the network 10 to initiate an edge service for the user terminal 20, or to transition a service being used by the terminal 20 over to edge processing at the edge location of the user terminal 20. For example, a company or other third party uses the network 10 to provide computing or data-processing services to user terminals 20 that belong to or are otherwise authorized by the company.

Charging for the consumption of edge services raises numerous challenges. For example, there may be significant network distance between the edge location and centralized charging-system entities. That distance implies latency and meaningful signaling overhead in the network in association with requests for charging originating from the edge location and flowing to the central charging entity/entities and corresponding responses being returned to the edge location. See the charging system 30 and associated billing system 32 depicted in Figure 1 for reference, where the charging system 30 provides online charging for the consumption of edge services.

Methods and apparatuses disclosed herein address a number of charging issues related to edge services and the involved techniques offer one or more advantages, such as reduced latencies in obtaining authorizations for edge-service consumption and reductions in the frequency or need for charging-related signaling to be exchanged between charging entities at an edge location and charging entities at a centralized location.

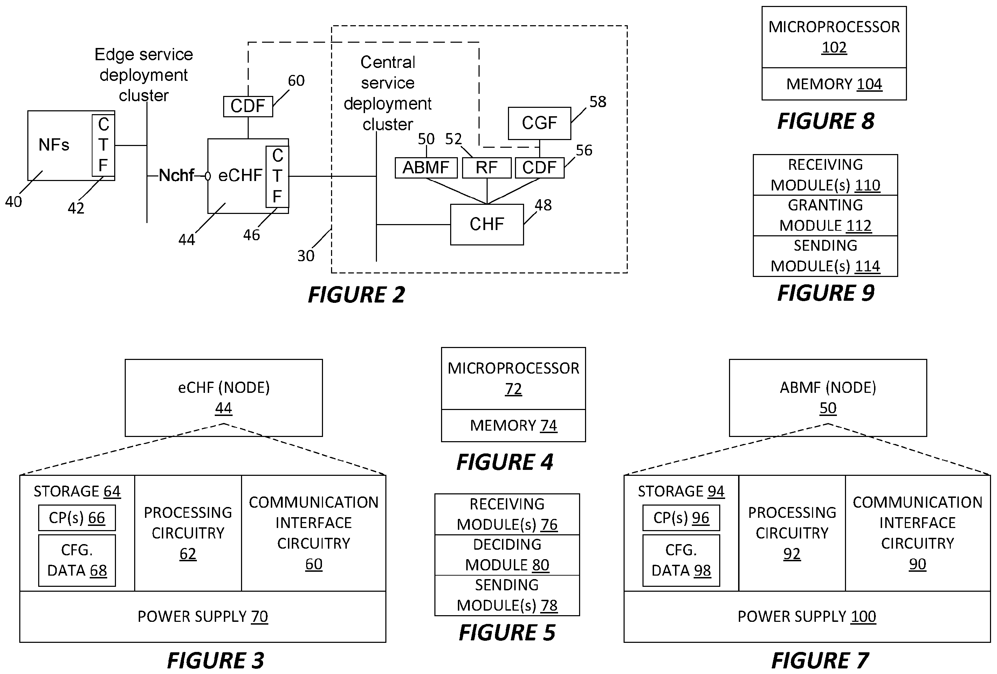

Figure 2 illustrates one embodiment of a solution for charging for edge services. One or more Network Functions (NFs) 40 of the network 10 include Charging Trigger Functions (CTFs) 42 that generate charging requests to initiate or continue service consumption by user terminals 20. In general, any given CTF sends an initial charging request to initiate service consumption, a final charging request at the termination of service consumption, and one or more intermediate requests to support ongoing service consumption during the interval between the initial and final charging requests. For any given charging request that is authorized, the CTF 42 receives a return charging response that indicates a granted quota, with the quota having a defined size, e.g., a specific number of service units, with each service unit corresponding to a quantum of service consumption, such as one minute of voice, or one megabyte of data, etc.

Assumptions specific to Figure 2 is that the NF(s) 40 in question are handling the initiation or continuation of user traffic for an edge service, such that the CTF 42 generates one or more charging requests for consumption of the edge service. One or more of the CN nodes 18 depicted in Figure 1 provide the NF(s) 40 and CTF(s) 42. For example, a CN node 18 operates as a Session Management Function (SMF) in the CN 16 and includes a CTF 42 that generates charging requests in association with requests for service usage from a user terminal 20.

An "edge" Charging Function (eCHF) 44 associated with the involved edge location receives incoming charging requests from the CTF 42 and includes a CTF 46 that sends corresponding charging requests towards another charging node, e.g., another CHF 48 that is centralized or associated with a centralized Account Balance Management Function (ABMF) 50, a Rating Function (RF) 52, a Charging Data Function (CDF) 56, and a Charging Gateway Function (CGF) 58. The eCHF 44 may be associated with one or more further CDFs 60. The ABMF, RF, CDF and CHF nodes or entities may be understood as constituting or belonging to the charging system 30 depicted in Figure 1.

The CHF 48 receives charging requests incoming from the eCHF 44 and passes them to the ABMF 50 for processing, with the ABMF 50 and the RF 52 cooperating to rate service units to be granted in response to the incoming charging requests and make corresponding value reservations against the involved subscriber account(s). Advantageously, as part of the charging requests sent by it towards the CHF 48, or in other signaling, the eCHF 44 identifies itself as an edge charging node or otherwise indicates that it is operative to make local grant decisions with respect to the consumption of edge services at the edge location with which the eCHF 44 is associated. As a further advantage, the ABMF 50 or another node associated therewith is operative to grant group quotas rather than individual quotas, at least under certain circumstances, e.g., when certain conditions are fulfilled.

Unlike an individual quota, which contains rated service units authorizing service consumption by a specific user terminal 20, a group quota contains rated service units that may be shared by or divided among multiple user terminals 20. As a particular example, there exists a defined group of affiliated user terminals 20, e.g., a group of user terminals 20 that are all associated with a particular company or other entity that uses the network 10 to provide an edge service for consumption by such user terminals 20. By granting a group quota in response to a charging request incoming from the eCHF 44, the ABMF 50 or other node provides the eCHF 44 with the opportunity to grant multiple local quotas at the edge location, using fractions of the group quota. In turn, that reduces charging authorization latency by eliminating or deferring the need for round-trip signaling between the eCHF 44 and the centralized charging entities, e.g., the CHF 48 and ABMF 50, and it reduces the number of overall signaling transactions between the eCHF 44 and the CHF 48 / ABMF 50.

Figure 3 depicts an example arrangement of the eCHF 44, where the eCHF 44 comprises communication interface circuitry 60, processing circuitry 62, and storage 64, which in one or more embodiments stores one or more computer programs 66 and one or more items of configuration data 68. The example eCHF 44 further comprises a power supply 70 that is configured to provide operating power to the various elements or subsystems comprising the eCHF 44.

The communication interface circuitry 60 comprises one or more transmitter circuits and one or more receiver circuits that are configured for the transmission and reception of signaling over one or more types of physical interfaces, e.g., wired or wireless interfaces. In an example embodiment, the communication interface circuitry 60 comprises one or more ethernet interfaces or other data-network interfaces that are operative for sending and receiving charging messages.

The processing circuitry 62 comprises fixed circuitry or programmatically configured circuitry or a mix of fixed and programmatically configured circuitry. In at least one embodiment and with reference to Figure 4, the processing circuitry 62 comprises one or more microprocessors 72 and associated memory 74, which may be considered as comprising or being included in the storage 64 shown in Figure 3. In the Context of Figure 4, the microprocessor(s) 72 are specially adapted to carry out the eCHF functionality described herein, based on the execution of computer program instructions stored in the memory 74.

As such, the storage 64 in one or more embodiments comprises one or more types of computer readable media, such as volatile memory for program execution and nonvolatile memory for longer term program storage. Example computer readable media include any one or more of SRAM, DRAM, FLASH memory, EEPROM, or Solid State Disk (SSD). The storage 64 provides non-transitory storage of computer program instructions for execution by the one or more microprocessor(s) 72, where non-transitory does not necessarily mean permanent or unchanging but rather storage having at least some persistence.

With the above example details in mind, in one embodiment a node is operative as an eCHF 44 for a communication network 10, with the node comprising communication interface circuitry 60 configured to send and receive messages, including requests and responses for charging, and further comprising processing circuitry 62 operatively associated with the communication interface circuitry 60.

The processing circuitry 62 is configured to: (a) receive a charging request from a CTF, requesting a quota for authorizing consumption by a first user terminal 20 of an edge service provided by the communication network 10, where the first user terminal 20 is a member of a defined group of affiliated user terminals 20; (b) send a corresponding charging request towards a charging node associated with the communication network 10; (c) receive a charging response from the charging node, the charging response indicating a granted group quota usable for authorizing consumption of the edge service by members of the defined group; (d) decide, as a locally-granted quota, what fraction of the granted group quota to grant to the first user terminal 20; and (e) send a charging response to the CTF, indicating the locally-granted quota. For example, the CTF in question is the CTF 42 shown in Figure 2, and the charging node in question is the CHF 48, also shown in Figure 2.

The processing circuitry 62 in one or more embodiments is configured to decide what fraction of the granted group quota to grant to the first user terminal 20 by deciding a size of the locally-granted quota in dependence on the edge service. Here, the size of the locally-granted quota is less than or equal to a size of the granted group quota. That is, the granted fraction constituting the locally-granted quota may be up to one-hundred percent of the granted group quota. Note that the granted group quota may only be applicable for a certain service, and the group may also only be defined for a specific edge service.

Saying that the size of the locally-granted quota depends on the edge service means that the eCHF 44 and one or more embodiments is configured to decide how much of-i.e., the fraction of-the granted group quota to allocate to the first user terminal 20 based on the type or nature of the edge service involved. As one example, responsive to determining that the edge service is a high data rate service or is otherwise of a nature such that the granted group quota is likely to be consumed quickly, the eCHF 44 makes the size of the locally-granted quota larger. Conversely, other types of edge services are known to have characteristically slow quota consumption-e.g., known based on information stored as configuration data 68 within the eCHF 44. For such edge services, the eCHF 44 makes the size of the locally-granted quota smaller. Here, "larger" and "smaller" are relative terms referenced to a default or nominal size.

The processing circuitry 62 in one or more embodiments is configured to decide what fraction of the granted group quota to grant to the first user terminal 20 by deciding a size of the locally-granted quota in dependence on whether one or more other ones of the affiliated user terminals 20 are connected to the communication network at a same edge location as the first user terminal 20. As before, the size of the locally-granted quota is less than or equal to a size of the granted group quota.

In an example of the decision logic described immediately above, the eCHF 44 allocates less than the total size of the granted group quota to the first user terminal 20, responsive to knowing or detecting that one or more of the other affiliated user terminals 20 are connected at the same edge location as the first user terminal 20. The eCHF 44 may determine that the other affiliated user terminals 20 are connected at the same edge location by detecting that they are accessing the network 10 through the same AN 14 used by the first user terminal 20 or are otherwise connecting to the network 10 through an AN 14 that is affiliated with the same edge-location designation as is associated with the AN 14 used by the first user terminal 20.

For example, based on detecting that one or more other ones of the affiliated user terminals 20 are connected at the same edge location, the eCHF 44 decides to grant less than the total size of the granted group quota to the first user terminal 20, in view of the likelihood that one or more other ones of the affiliated user terminals 20 will request use of the same edge service in the near future. The fraction of the granted group quota that is granted to the first user terminal 20 as the locally-granted quota may depend on the number of affiliated user terminals 20 that are active or otherwise connected at the edge location or may depend on the total number of affiliated user terminals in the group.

The processing circuitry in one or more embodiments is configured to decide what fraction of the granted group quota to grant to the first user terminal 20 by deciding a size of the locally-granted quota in dependence on whether one or more temporally-proximate charging requests have been received at the eCHF 44 for any other ones of the affiliated user terminals, for the edge service. As before, the size of the granted quota being less than or equal to a size of the granted group quota.

"Temporally-proximate" charging requests are charging requests received within a defined interval prior to the charging request received for the first user terminal 20. The defined interval may be a configured value, such as 30 seconds, one minute, two minutes, etc. the size of the interval may be configured according to network-operator policy, and the interval may be dependent upon the type of edge service involved. These details recognize that in some respects there is an advantage to giving the first user terminal 20 a larger quota, e.g. to avoid triggering a subsequent charging request for the first user terminal 20 unnecessarily soon, while on the other hand there is an advantage in preserving some of the granted group quota for use in making a low-latency local grant to another one of the affiliated user terminals 20 or even to the first user terminal 20, assuming it is consumption of the edge service continues.

The processing circuitry 62 of the eCHF 44 in one or more embodiments is configured to consider a multiplicity of factors or parameters when deciding what fraction of a granted group quota to allocate to a user terminal 20 as a locally-granted quota. For example, the processing circuitry 62 is configured to make a joint or weighted evaluation of any two or more of the following factors: the type of edge service, the number of affiliated user terminals 20 in the group, the number of affiliated user terminals that are concurrently connected at the same edge location, historical data indicating the frequency or the likelihood of receiving multiple charging requests for the edge service for respective ones of the affiliated user terminals 20, e.g., data indicating the number of temporally-proximate charging requests received from any of the affiliated user terminals for the edge service while operating at the involved edge location.

Further, in at least one embodiment, the processing circuitry 62 of the eCHF 44 is configured to learn or otherwise adapt its decision strategy for determining what fraction of a granted group quota to allocate to any given one of the affiliated user terminals 20 at any given time. For example, the eCHF 44 adjusts the nominal fractional allocation that it uses as a baseline, based on monitoring how quickly fractional quotas are consumed by respective ones of the affiliated user terminals 20 and monitoring how quickly the overall granted group quota is consumed.

Consider an example case where the locally-granted quota given to a first user terminal 20 leaves a remaining portion of the granted group quota as a remaining group quota. That is, the size of the locally-granted quota is smaller than the size of the granted group quota, where the "size" of a quota refers to the number rated service units in the quota. Referring to the remaining portion or fraction of the granted group quota as the "remaining group quota", the processing circuitry 62 in one or more embodiments is configured to decide, as a further locally-granted quota, what fraction of the remaining group quota to grant to another one of the affiliated user terminals 20 in response to the eCHF 44 receiving a charging request for the other one of the affiliated user terminals 20, requesting a quota for authorizing consumption by the other one of the affiliated user terminals 20 of the edge service.

With respect to the eCHF 44 receiving a further charging request from the same or another CTF 42, the further charging request requesting a quota for authorizing consumption of the edge service by a second user terminal 20 among the affiliated user terminals 20, the processing circuitry 62 in one or more embodiments is configured to decide a further locally-granted quota for the second user terminal 20 from a then-remaining fraction of the granted group quota, and send a further charging response to the same or other CTF 42, indicating the further locally-granted quota.

With respect to the eCHF 44 receiving a further charging request from the same or another CTF 42, the further charging request requesting a quota for authorizing consumption of the edge service by a second user terminal 20 among the affiliated user terminals 20, the processing circuitry 62 in one or more embodiments is configured to communicate with the charging node, e.g., the CHF 48, to obtain a further quota from the charging node, to authorize consumption of the edge service by the second user terminal 20, in response to determining that the granted group quota has been exhausted or a then-remaining amount of the granted group quota is not sufficient for responding to the further charging request.

The charging request sent from the eCHF 44 towards the charging node, e.g., towards the CHF 48 shown in Figure 2, is an "edge charging request" according to one or more embodiments. An edge charging request indicates at least one of: an edge location of the eCHF, or that the eCHF is configured to decide locally-granted quotas from corresponding granted group quotas. Correspondingly, the response returned to the eCHF 44 from the other charging node is an "edge charging response". In an example embodiment, an edge charging response indicates the group affiliation of the user terminal 20 for which the eCHF 44 sent the charging request.

For example, the eCHF 44 receives a charging request from the CTF 42, requesting consumption of an edge service by user terminal 20 and at this point in the charging process the eCHF 44 does not know that the user terminal 20 belongs to a group of affiliated user terminals 20 for which the use of group quotas may be advantageous. However, sending an edge charging request, triggers the charging system 30, e.g., the ABMF 50, in particular, to determine whether the involved user terminal 20 belongs to a group. In one or more embodiments, the response coming back to the eCHF 44, or signaling associated therewith, indicates the group affiliation of the user terminal 20.

For example, the eCHF 44 receives a group identifier or receives identifiers of the user terminals 20 constituting the group, and it understands from such information that the user terminal 20 belongs to a group of affiliated user terminals 20 and that the returned quota is a group quota that may be shared among or divided among two or more ones of the affiliated user terminals 20. In this sense, it should be understood that eCHF 44 is also operative to handle responses that involve individual, or per-terminal granted quotas, i.e., it can receive and recognize responses that contain a quota intended only for the user terminal 20 for which the eCHF 44 sent a charging request.

The processing circuitry 62 of the eCHF 44 in one or more embodiments is configured to evaluate group affiliations of other user terminals 20 connected to the communication network 10 at an edge location of the eCHF 44, to determine the presence of other members of the defined group in which the first user terminal 20 has membership. That is, for any given user terminal 20 for which the eCHF 44 receives a charging request, the eCHF 44 in one or more embodiments is configured to determine whether the user terminal 20 belongs to a group of affiliated user terminals 20 and correspondingly decide whether to grant a fraction of any granted group quota or remaining group quota that is currently available at the eCHF 44.

In more detail, assume that the eCHF 44 receives a charging request sent to the eCHF on behalf of a first user terminal 20, and assume that the charging response returned to eCHF 44 for that charging request indicates that the first user terminal 20 belongs to a group, such that the granted quota returned in the charging response is treated by the eCHF 44 as a granted group quota. Further, assume that the charging response lists or otherwise identifies the user terminals 20 that belong to a group.

As such, when the eCHF 44 receives a subsequent charging request sent for a second user terminal 20 connecting to the network 10 through the same edge location, the eCHF 44 evaluates the identity of the second user terminal 20 involved in that subsequent charging request against the group membership information in its possession, to determine whether the second user terminal 20 belongs a group for which there may be a granted group quota or remaining group quota available at the eCHF 44. In this context, in one or more embodiments, the processing circuitry 62 is configured to decide how much of a granted group quota-i.e., what fraction-to grant to a first user terminal 60 for which it receives a granted group quota, in dependence on the presence or absence of other members of the defined group in which the first user terminal 20 has membership.

Figure 5 illustrates another embodiment of an eCHF 44, implemented as a set of processing units or modules, where a processing unit or module shall be understood as a logical circuit or function implemented via underlying physical processing circuitry. The included processing modules include one or more receiving modules 76 that are configured to receive a charging request from a CTF, requesting a quota for authorizing consumption by a first user terminal 20 of an edge service provided by a communication network 10, the first user terminal being a member of a defined group of affiliated user terminals. The functional modules further include one or more sending modules 78 that are configured to send a corresponding charging request towards a charging node associated with the communication network 10, e.g., towards another, possibly centralized CHF that is associated with an ABMF 50.

The one or more receiving modules 76 are further configured to receive a response from the charging node, the response indicating a granted group quota usable for authorizing consumption of the edge service by members of the defined group. The eCHF 44 includes a deciding module 80 that is configured to decide, as a locally-granted quota, what fraction of the granted group quota to grant to the first user terminal 20, and the one or more sending modules 78 are configured to send a charging response to the CTF, indicating the locally-granted quota.

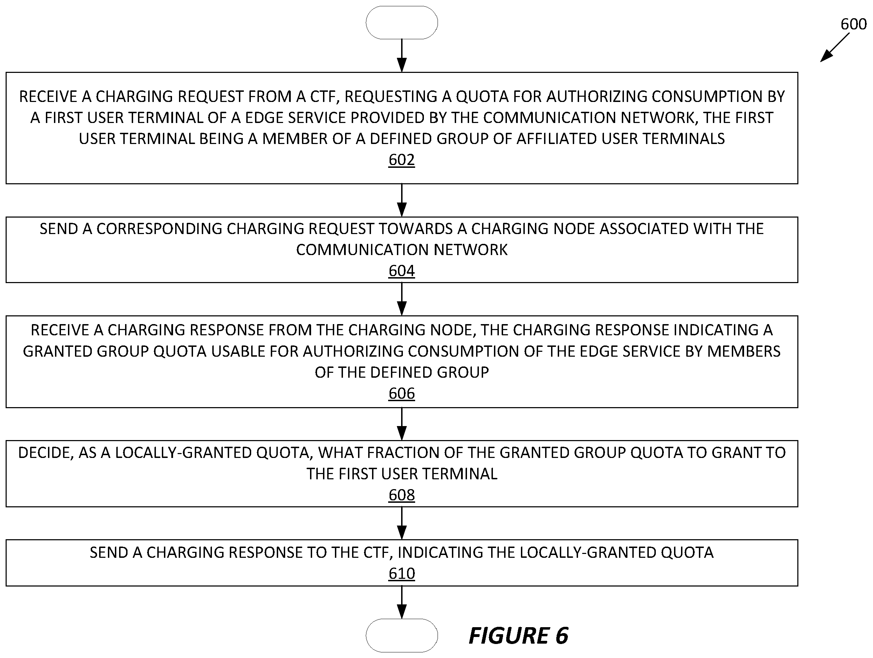

Figure 6 illustrates a method 600 of charging control for a communication network 10, where the method 600 performed by a node operative as eCHF 44 and includes: receiving (Block 602) a charging request from a CTF, requesting a quota for authorizing consumption by a first user terminal 20 of an edge service provided by the network 10, the first user terminal 20 being a member of a defined group of affiliated user terminals 20; sending (Block 604) a corresponding charging request towards a charging node associated with the network 10; receiving (Block 606) a response from the charging node, the response indicating a granted group quota usable for authorizing consumption of the edge service by members of the defined group; deciding (Block 608), as a locally-granted quota, what fraction of the granted group quota to grant to the first user terminal 20; and sending (Block 610) a charging response to the CTF, indicating the locally-granted quota.

Deciding what fraction of the granted group quota to grant to the first user terminal 20 comprises, for example, deciding a size of the locally-granted quota, based on the edge service. As another example, deciding what fraction of the granted group quota to grant to the first user terminal 20 comprises deciding a size of the locally-granted quota, based on whether one or more other ones of the affiliated user terminals are connected to the network 10 at a same edge location as the first user terminal 20. As a further example, deciding what fraction of the granted group quota to grant to the first user terminal 20 comprises deciding a size of the locally-granted quota, based on whether one or more temporally-proximate charging requests have been received at the eCHF 44 for any other ones of the affiliated user terminals 20, for the edge service. Any two or more of these bases and other additional or alternate bases are considered jointly, in one or more embodiments, to decide what fraction of the granted user quota to grant as the locally-granted quota.

The fraction of the granted group quota that is granted as the locally-granted quota leaves a remaining portion of the granted group quota as a remaining group quota, for example. In such cases, the method 600 may further comprise the eCHF 44 deciding, as a further locally-granted quota, what fraction of the remaining group quota to grant to another one of the affiliated user terminals 20 in response to the eCHF 44 receiving a charging request for the other one of the affiliated user terminals 20, requesting a quota for authorizing consumption by the other one of the affiliated user terminals 20 of the edge service.

After granting a local quota to the first user terminal 20 from the granted group quota, the eCHF 44 may receive a further charging request from the same or another CTF, where the further charging request requests a quota for authorizing consumption of the edge service by a second user terminal 20 among the affiliated user terminals 20. In at least one embodiment of the method 600, the eCHF 44 decides a further locally-granted quota for the second user terminal 20 from a then-remaining fraction of the granted group quota and sends a further charging response to the same or other CTF, indicating the further locally-granted quota.

Broadly, consider an example case where the eCHF 44 receives a granted group quota in reply to a charging request sent from the eCHF 44 for a first user terminal 20 in a group of affiliated user terminals 20. Further, assume that the eCHF 44 grants less than all of the granted group quota to the first user terminal 20, as a locally-granted quota to authorize consumption of the edge service by the first user terminal 20. The eCHF 44 may then grant a fraction of the remaining group quota to another one of the user terminals 20 operating at the same edge location. However, at some point, the eCHF 44 determines that the remaining group quota is exhausted or insufficient to cover a charging request for one of the user terminals 20, and, in response, it communicates with the charging node to obtain a further quota from the charging node, to authorize consumption of the edge service by the involved user terminal 20. That further quota may be an individual quota targeted to the involved user terminal 20 or may be another group quota that is dividable among the user terminals 20 in the group. Such determination that the remaining group quota is exhausted or insufficient to cover a charging request may be performed at the receipt of a charging request but may also be performed by the eCHF 44 at any time irrespective of incoming charging request as the result of for example determining that the remaining quota is below a threshold or is consumed at a certain pace.

Figure 7 depicts an example arrangement of a node operative as an ABMF 50. The ABMF 50 is configured to grant group quotas, at least on a conditional basis, e.g., such as granting a group quota conditioned on recognizing that an incoming charging request is associated with an eCHF 44 that is operative to make local granting decisions, and further recognizing that the user terminal 20 involved in the charging request belongs to a group of affiliated user terminals 20. In another arrangement, the ABMF 50 need not be aware of the local-granting capabilities of the eCHF 44 and, instead, the CHF 48 requests group-based granting from the ABMF 50 when appropriate-e.g., subject to conditions as set out immediately above. As such, it should be understood that the intelligence for making or deciding group grants versus individual grants may be implemented at various locations/nodes within the charging system 30.

As for the ABMF 50, in the illustrated example it comprises communication interface circuitry 90, processing circuitry 92, and storage 94, which in one or more embodiments stores one or more computer programs 96 and one or more items of configuration data 98. The example ABMF 50 further comprises a power supply 100 that is configured to provide operating power to the various elements or subsystems comprising the ABMF 50.

The communication interface circuitry 90 comprises one or more transmitter circuits and one or more receiver circuits that are configured for the transmission and reception of signaling over one or more types of physical interfaces, e.g., wired or wireless interfaces. In an example embodiment, the communication interface circuitry 90 comprises one or more ethernet interfaces or other data-network interfaces that are operative for sending and receiving charging messages.

The processing circuitry 92 comprises fixed circuitry or programmatically configured circuitry or a mix of fixed and programmatically configured circuitry. In at least one embodiment and with reference to Figure 8, the processing circuitry 92 comprises one or more microprocessors 102 and associated memory 104, which may be considered as comprising or being included in the storage 94 shown in Figure 7. In the Context of Figure 8, the microprocessor(s) 102 are specially adapted to carry out the ABMF functionality described herein, based on the execution of computer program instructions stored in the memory 104.

As such, the storage 94 in one or more embodiments comprises one or more types of computer readable media, such as volatile memory for program execution and nonvolatile memory for longer term program storage. Example computer readable media include any one or more of SRAM, DRAM, FLASH memory, EEPROM, or Solid State Disk (SSD). The storage 104 provides non-transitory storage of computer program instructions for execution by the one or more microprocessor(s) 102, where non-transitory does not necessarily mean permanent or unchanging but rather storage having at least some persistence.

With the above example details in mind, in one embodiment a node is operative as an ABMF 50 for a communication network 10, with the node comprising communication interface circuitry 90 configured to receive and send messages, including requests and responses related to charging, and further comprising processing circuitry 92 operatively associated with the communication interface circuitry 90.

In an example embodiment, the processing circuitry 92 of the ABMF 50 is configured to: receive a request originating from an eCHF 44, requesting a quota for authorizing consumption by a first user terminal 20 of an edge service provided by the network 10, the first user terminal 20 being a member of a defined group of affiliated user terminals; grant a group quota usable for authorizing consumption of the edge service by members of the defined group; and send a response intended for the eCHF 44, indicating the granted group quota.

The processing circuitry 92 in one or more embodiments is configured to grant the group quota, rather than an individual quota, responsive to determining that the eCHF 44 is operative to decide locally-granted quotas from respective granted group quotas, for user terminals 20 that are connected to the network 10 at an edge location associated with the eCHF 44 and are members of respective defined groups. The processing circuitry 92 in one or more embodiments is configured to grant the group quota, rather than an individual quota, responsive to the charging node further determining that the first user terminal 20 belongs to the defined group, based on accessing a data store that indicates group memberships for individual user terminals 20. For example, the configuration data 98 comprises a table or other data structure that links identifiers of user terminals to group identifiers.

The processing circuitry in one or more embodiments is configured to determine that the eCHF 44 is operative to decide locally-granted quotas based on the charging request indicating that the eCHF 44 is operative to decide locally-granted quotas. The indication may be an explicit indication of the capability, e.g., an Information Element (IE) or other data field or element in the charging request message that indicates the capability. However, in at least one embodiment, the indication is implicit, e.g., based on the eCHF 44 identifying itself as an eCHF, the ABMF 50 infers that the eCHF 44 is operative to make local granting decisions-i.e., that the eCHF 44 is operative to use receive and manage group quotas for groups of affiliated user terminals 20.

The response intended for the eCHF identifies, for example, the defined group and the user terminals 20 that are members in the defined group, for use by the eCHF 44 in locally identifying other members of the defined group that connect, or are connected, to the network 10 at an edge location associated with the eCHF 44. The ABMF 50 may include group information in every response that contains a granted group quota, for uniformity. However, in at least one embodiment, if the involved user terminal 20 has already been identified to the eCHF 44 as belonging to a group, the response from the ABMF 50 omits group membership information, although it may still be marked or indicated as containing a group quota.

The ABMF 50 in one or more embodiments includes or communicates with a RF 52 that determines the granted group quota-i.e., rates the service units contained in the granted group quota. If the RF 52 is separate from the ABMF 50, interactions between the RF 52 and the ABMF 50 may be managed by or otherwise conducted through the CHF 48.

In at least one embodiment, the processing circuitry 92 of the ABMF 50 is configured to decide a size of a granted group quota based on at least one of: the edge service, or a known or estimated number of the affiliated user terminals 20 at an edge location associated with the eCHF 44. For example, the ABMF 50 may monitor which user terminals 20 are involved in a succession of charging requests incoming from the eCHF 44, such that it learns how many affiliated user terminals are active, or have recently been active, at the edge location associated with the eCHF 44. The ABMF 50 uses that information to, for example, decide to grant a group quota rather than an individual quota, or to decide the size of a granted group quota. A practical example is the ABMF 50 increasing the size of a granted group quota in response to the number of affiliated user terminals 20 that are active-connected to the network 10-at the edge location of the eCHF 44.

Figure 9 illustrates another embodiment of an ABMF 50, implemented as a set of processing units or modules. The included processing modules include one or more receiving modules 110 that are configured to receive a request originating from an eCHF 44 or otherwise corresponding to a charging request originating from the eCHF 44, with the request requesting a quota for authorizing consumption by a first user terminal 20 of an edge service provided by the network 10. In this example, the first user terminal is a member of a defined group of affiliated user terminals 20. Further included, a granting module 112 is configured to grant a group quota usable for authorizing consumption of the edge service by members of the defined group, and a sending module 114 is configured to send a response intended for the eCHF 44, Indicating the granted group quota. The response or signaling corresponding thereto is sent towards the eCHF 44, e.g., through the CHF 48.

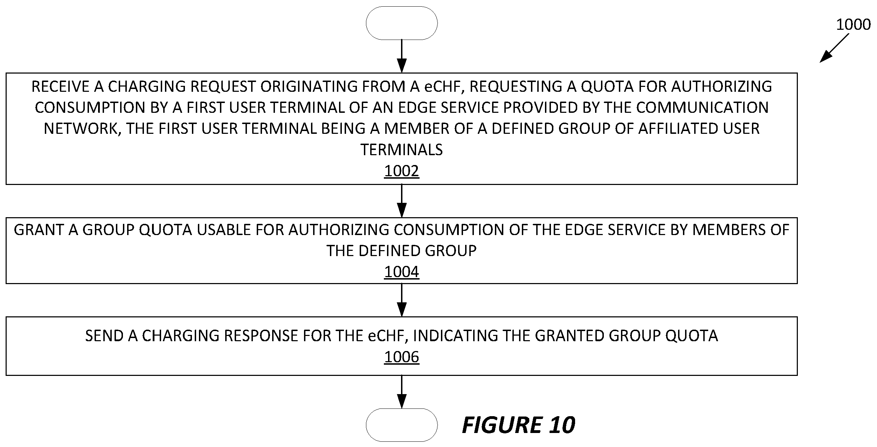

Figure 10 illustrates a method 1000 of charging control for a communication network, where the method is performed by a charging node associated with the communication network and comprising: receiving (Block 1002) a request originating from an eCHF 44, requesting a quota for authorizing consumption by a first user terminal 20 of an edge service provided by the communication network, the first user terminal 20 being a member of a defined group of affiliated user terminals; granting (Block 1004) a group quota usable for authorizing consumption of the edge service by members of the defined group; and sending (Block 1006) a response for the eCHF, indicating the granted group quota.

The charging node that performs the method 1000 is, for example, an ABMF 50 such as shown in Figure 2, where the ABMF 50 may be a "centralized" charging node that supports the eCHF 44 and may communicate with the eCHF 44 indirectly, e.g., via a second CHF 48, which also may be a centralized node of the charging system 30. For example, the CHF 48 and the ABMF 50 may support multiple eCHFs or other CHFs comprised in the network 10.

Granting the group quota is performed, for example, responsive to the charging node determining that the eCHF 44 is operative to decide locally-granted quotas from respective granted group quotas, for user terminals 20 that are connected to the communication network at an edge location associated with the eCHF 44 and are members of respective defined groups. In at least one embodiment, granting the group quota is performed responsive to the charging node further determining that the first user terminal 20 belongs to the defined group, based on accessing a data store that indicates group memberships for individual user terminals 20, or at least user terminals 20 that belong to the defined group or groups.

Determining that the eCHF 44 is operative to decide locally-granted quotas in one or more embodiments is based on the charging request indicating that the eCHF 44 is operative to decide locally-granted quotas. The response identifies the defined group and the user terminals that are members in the defined group, for use by the eCHF 44 in locally identifying other members of the defined group that connect, or are connected, to the communication network at an edge location associated with the eCHF 44. Further, the charging node in one or more embodiments decides a size of the granted group quota based on at least one of: the edge service, or a known or estimated number of the affiliated user terminals 20 at an edge location associated with the eCHF 44.

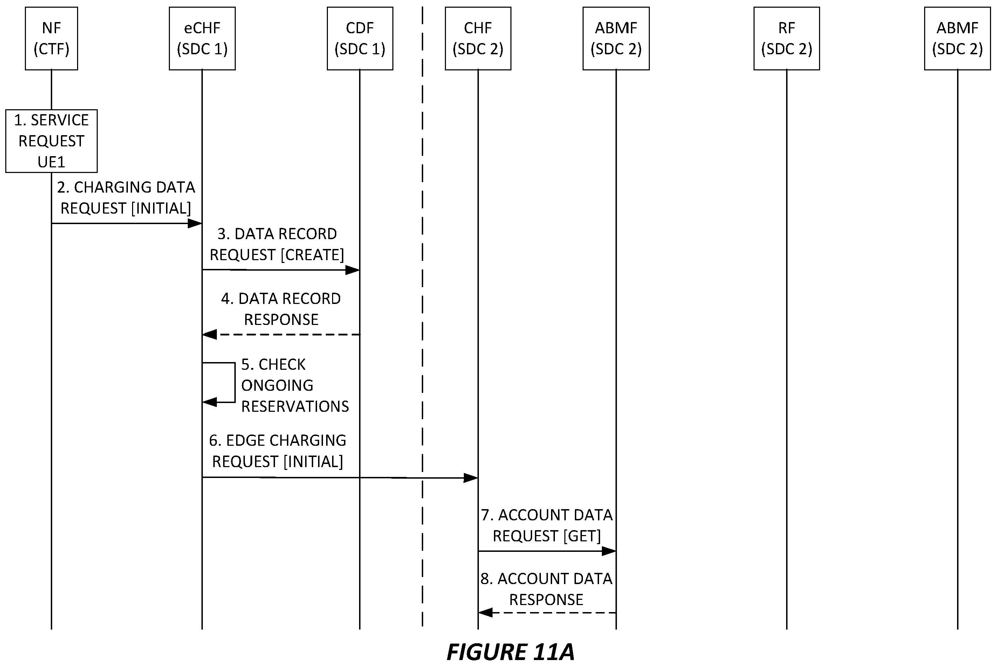

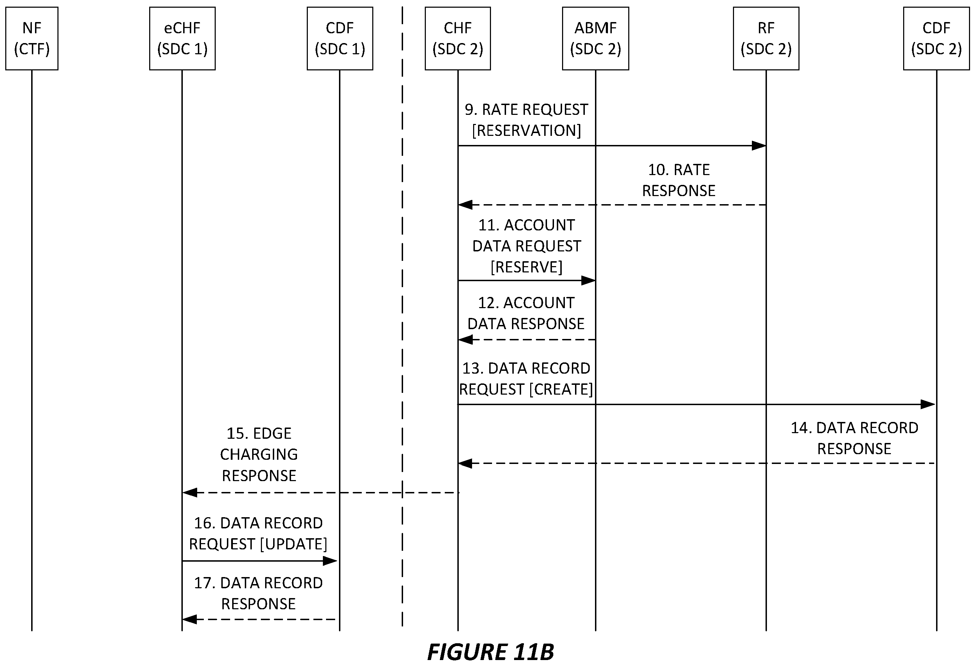

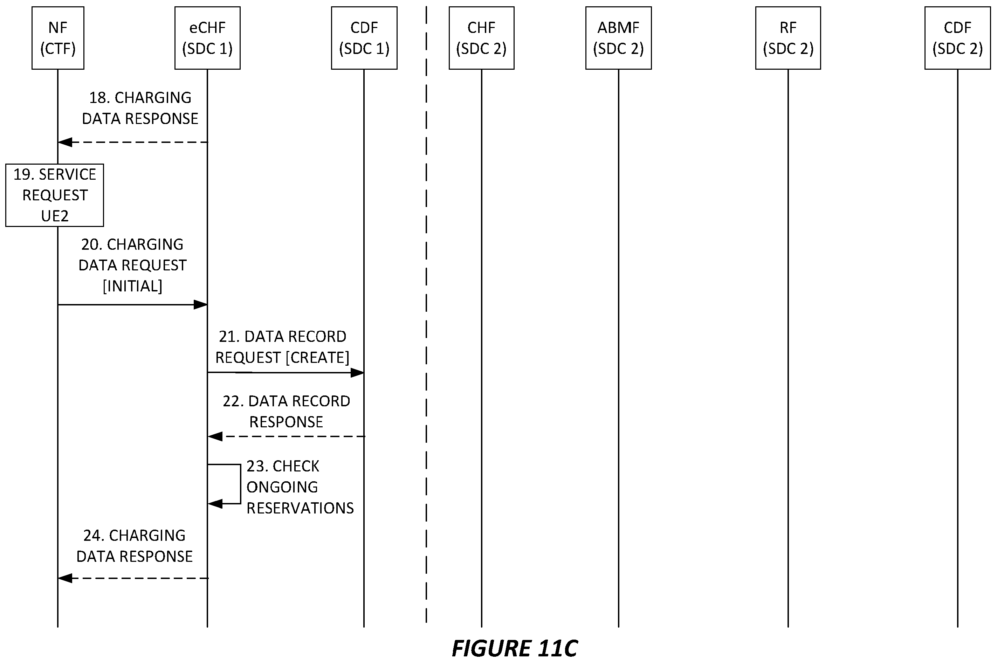

Figures 11A-C together illustrate an example signaling flow according to one or more embodiments. In the diagram, "SDC 1" denotes a first service deployment center at an edge location, and "SDC 2" denotes a centralized service deployment. See Figure 2 for examples of SDC 1 and SDC 2. Further, in the following enumerated steps, "UE1" denotes a first user terminal 20, which may also be referred to as a first user equipment (UE), and "UE2" denotes a second user terminal 20 that is affiliated with UE1.
1. Service request: UE 1 request for a service that is provided by the NF (e.g., video streaming, internet connection).
2. Charging data request [Initial]: the NF (CTF) determines that the service is chargeable, including which rating group(s) it belongs to, and that it may require quota monitoring. It then sends the information about the rating group and the UE to the eCHF, requesting recording and possibly specifying the size of the requested quota for the service.
3. Data record request [Create]: the eCHF at the SDC 1 (at the edge deployment location) decides based on the charging information and internal configuration that it needs to create a record with the charging information and reservations made and it sends a request to the CDF at the SDC 1.
4. Data record response: the CDF at the SDC 1 records the information by creating a CDR, and it responds to the eCHF with the information that it has been created.
5. Check ongoing reservations: the eCHF checks whether it has any reservations matching the UE1 and the rating group(s) that can be used. The eCHF determines that there are no applicable reservations for UE1.
6. Edge charging request [Initial]: the eCHF sends a request to another charging node, here, a CHF of the SDC 2, requesting service units for UE1 and the rating groups(s). In one or more embodiments, the request may explicitly ask for identification of other UEs that are eligible to use the requested units.
7. Account data request [Get]: the CHF at the SDC 2 decides, based on the charging information in the charging data request and internal configuration information, that it needs to get account information for UE1.
8. Account data response: the ABMF at the SDC 2 checks the account and responds with the account information.
9. Rate request [Reservation]: the CHF at the SDC 2 decides based on the charging information, account data, and internal configuration information, that it needs to rate the service before it can reserve anything from the account.
10. Rate response: the RF at the SDC 2 rates the event based on charging information, account data, and internal configuration information, and responds with the amount to reserve and indicates that an eCHF requested the quota.
11. Account data request [Reserve]: the CHF at the SDC 2 decides, based on the rating, that it needs to reserve from the account.
12. Account data response: the ABMF at the SDC 2 checks the account and responds with a group quota corresponding to the reserved amount and an indication of the UEs connected to the account-i.e., an indication of affiliated UEs that constitute the group eligible to use the granted service units. The ABMF also starts monitoring for any account changes that affect which UEs are connected to the account. Any changes to the account affiliation are communicated to the eCHF, prompting it to make a reauthorization or to otherwise adjust which UEs it considers as being affiliated with respect to consumption of the group quota.
13. Data record request [Create]: the CHF at the SDC 2 decides, based on the charging information and internal configuration information that it needs to create a record with the charging information and reservations made, and it sends a request to the CDF.
14. Data record response: the CDF at the SDC 2 records the information by creating a CDR, it the responds with the information that it has been created.
15. Edge charging response: the CHF at the SDC 2 responds to the eCHF with the outcome of request, e.g., the granted units per rating groups and which UEs may use these units; which UEs are eligible to use the rated units may also be indicated on a per rating-group basis.
16. Data record request [Update]: the eCHF decides, based on the response from CHF at the SDC 2 and internal configuration information, that it needs to update the record with the new information and sends a request to the CDF at the SDC 1.
17. Data record response: the CDF at the SDC 1 records the information from the eCHF by updating the CDR, and it the responds with an indication that the information has been updated.
18. Charging data response: the eCHF responds to the CTF of the NF with the granted service units-i.e., it indicates a locally-granted quota that is a determined fraction of the quota returned from the CHF at the SDC 2. Note, too, that eCHF or the CHF at the SDC 2 may reserve more than needed at the moment for UE1. More generally, any one or more of the ABMF, CHF, or RF at the SDC 2 may allocate a group quota that is larger than that requested for UE 1, to increase the likelihood or practicality of the eCHF being able to serve divide the granted group quota across two or more service requests.
19. Service request: a second UE, UE2, requests for a service that is provided by the NF (e.g., video streaming, internet connection); here, it is assumed that the UE2 requests that same edge service for which the group quota was granted in conjunction with the request for service from UE1.
20. Charging data request [Initial]: the NF (CTF) determines that the service is chargeable, including determining to which rating group(s) it belongs, and that it may require quota monitoring. The CTF then sends information about the rating group and the UE to the eCHF, requesting recording and, possibly, specifying a quota size for the service.
21. Data record request [Create]: the eCHF decides, based on the charging information and internal configuration information that it needs to create a record with the charging information and reservations made and sends a request to the CDF at the SDC 1.
22. Data record response: the CDF at the SDC 1 records the information by creating a CDR and responds to the eCHF with an indication that the information has been created.
23. Check ongoing reservations: the eCHF checks whether it has any reservations matching UE2 and the rating group(s) that can be used for authorizing consumption of the edge service by UE2. The eCHF recognizes that it can use the reservation made for UE1, i.e., there is no need at this point for the eCHF to contact the CHF at the SDC 2, at this point, because the eCHF recognizes that UE2 is eligible to use any remaining service units in the granted group quota returned to it for the earlier service request involving UE1.
24. Charging data response: the eCHF responds to the service request from the CTF for UE2 with a locally-granted quota allocated from the service units remaining in the group quota, where this step presupposes that the fraction of the granted group quota that the eCHF granted for UE1 was less than one hundred percent-i.e., the size of the locally-granted quota provided for UE1 was smaller than the size of the granted group quota.

The steps 7 to 14 may be done in a different order or performed multiple times, depending upon CHF implementation details and what is needed from a request point of view. To avoid unnecessary signaling, the ABMF and the RF may be combined and in that case the CHF at the SDC 2 would make a "rate and reserve" request to the combined AMBF and RF at the SDC 2.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method (700) of charging control for a communication network (10), the method performed by a node operative as an edge charging function (eCHF) (44) and comprising:
receiving a charging request from a Charging Trigger Function (CTF) (42), requesting a quota for authorizing consumption by a first user terminal (20) of an edge service provided by the communication network (10), the first user terminal (20) being a member of a defined group of affiliated user terminals;
sending a corresponding charging request towards a charging node (48) associated with the communication network (10);
receiving a charging response from the charging node (48), the charging response indicating a granted group quota usable for authorizing consumption of the edge service by members of the defined group;
deciding, as a locally-granted quota, what fraction of the granted group quota to grant to the first user terminal (20); and
sending a charging response to the CTF (42), indicating the locally-granted quota.

2. The method according to claim 1, wherein deciding what fraction of the granted group quota to grant to the first user terminal (20) comprises deciding a size of the locally-granted quota, based on the edge service, the size of the locally-granted quota being less than or equal to a size of the granted group quota.

3. The method according to claim 1 or 2, wherein deciding what fraction of the granted group quota to grant to the first user terminal (20) comprises deciding a size of the locally-granted quota, based on whether one or more other ones of the affiliated user terminals are connected to the communication network (10) at a same edge location as the first user terminal (20), the size of the locally-granted quota being less than or equal to a size of the granted group quota.

4. The method according to any of claims 1-3, wherein deciding what fraction of the granted group quota to grant to the first user terminal (20) comprises deciding a size of the locally-granted quota, based on whether one or more temporally-proximate charging requests have been received at the eCHF (44) for any other ones of the affiliated user terminals, for the edge service, the size of the locally-granted quota being less than or equal to a size of the granted group quota.

5. The method according to any of claims 1-4, wherein the fraction of the granted group quota that is granted as the locally-granted quota leaves a remaining portion of the granted group quota as a remaining group quota, and wherein the method further comprises deciding, as a further locally-granted quota, what fraction of the remaining group quota to grant to another one of the affiliated user terminals in response to the eCHF (44) receiving a charging request for the other one of the affiliated user terminals, requesting a quota for authorizing consumption by the other one of the affiliated user terminals of the edge service.

6. The method according to any of claims 1-5, further comprising receiving a further charging request at the eCHF (44) from the same or another CTF (42), the further charging request requesting a quota for authorizing consumption of the edge service by a second user terminal among the group of affiliated user terminals, deciding a further locally-granted quota for the second user terminal from a then-remaining fraction of the granted group quota, and sending a further charging response to the same or other CTF (42), indicating the further locally-granted quota.

7. The method according to any of claims 1-5, further comprising receiving a further charging request at the eCHF (44) from the same or another CTF (42), the further charging request requesting a quota for authorizing consumption of the edge service by a second user terminal among the group of affiliated user terminals, determining that the granted group quota has been exhausted or a then-remaining amount of the granted group quota is not sufficient for responding to the further charging request, and, correspondingly, communicating with the charging node (48) to obtain a further quota from the charging node (48), to authorize consumption of the edge service by the second user terminal.

8. The method according to any of claims 1-7, wherein sending the corresponding charging request towards the charging node (48) comprises sending an edge charging request that indicates at least one of: an edge location of the eCHF (44), or that the eCHF (44) is configured to decide locally-granted quotas from corresponding granted group quotas.

9. The method according to any of claims 1-8, wherein receiving the charging response from the charging node (48) comprises receiving an edge charging response that indicates the group affiliation of the first user terminal (20).

10. A node operative as an edge charging function (eCHF) (44) for a communication network (10), the node comprising:
communication interface circuitry (60) configured to send and receive messages, including charging requests and charging responses; and
processing circuitry (62) operatively associated with the communication interface circuitry (60) and configured to:
receive a charging request from a Charging Trigger Function (CTF) (42), requesting a quota for authorizing consumption by a first user terminal (20) of an edge service provided by the communication network (10), the first user terminal (20) being a member of a defined group of affiliated user terminals;
send a corresponding charging request towards a charging node (48) associated with the communication network (10);
receive a charging response from the charging node (48), the charging response indicating a granted group quota usable for authorizing consumption of the edge service by members of the defined group;
decide, as a locally-granted quota, what fraction of the granted group quota to grant to the first user terminal (20); and
send a charging response to the CTF (42), indicating the locally-granted quota.

11. The node according to claim 10, wherein the processing circuitry (62) is configured to decide what fraction of the granted group quota to grant to the first user terminal (20) by deciding a size of the locally-granted quota in dependence on the edge service, the size of the locally-granted quota being less than or equal to a size of the granted group quota.

12. The node according to claim 10 or 11, wherein the processing circuitry (62) is configured to decide what fraction of the granted group quota to grant to the first user terminal (20) by deciding a size of the locally-granted quota in dependence on whether one or more other ones of the affiliated user terminals are connected to the communication network (10) at a same edge location as the first user terminal (20), the size of the locally-granted quota being less than or equal to a size of the granted group quota.

13. A method (800) of charging control for a communication network (10), the method performed by a charging node (48) associated with the communication network (10) and comprising:
receiving a request originating from an edge Charging Function (eCHF) (44), requesting a quota for authorizing consumption by a first user terminal (20) of an edge service provided by the communication network (10), the first user terminal (20) being a member of a defined group of affiliated user terminals;
granting a group quota usable for authorizing consumption of the edge service by members of the defined group, wherein granting the group quota is performed responsive to the charging node (48) determining that the eCHF (44) is operative to decide locally-granted quotas from respective granted group quotas, for user terminals that are connected to the communication network (10) at an edge location associated with the eCHF (44) and are members of respective defined groups; and
sending a response intended for the eCHF (44), indicating the granted group quota.

14. The method according to claim 13, wherein granting the group quota is performed responsive to the charging node (48) further determining that the first user terminal (20) belongs to the defined group, based on accessing a data store that indicates group memberships for individual user terminals.

15. The method according to claim 13 or 14, further comprising determining that the eCHF (44) is operative to decide locally-granted quotas based on the request indicating that the eCHF (44) is operative to decide locally-granted quotas.

16. The method according to any of claims 13-15, wherein the response identifies the defined group and the user terminals that are members in the defined group, for use by the eCHF (44) in locally identifying other members of the defined group that connect, or are connected, to the communication network (10) at an edge location associated with the eCHF (44).

17. The method according to any of claims 13-16, wherein the charging node (48) comprises an Account Balance Management Function (ABMF) that includes or communicates with a Rating Function (RF) that determines the granted group quota.

18. The method according to any of claims 13-17, further comprising deciding a size of the granted group quota based on at least one of: the edge service, or a known or estimated number of the affiliated user terminals at an edge location associated with the eCHF (44).

19. A charging node (48) configured for charging control for a communication network (10), the charging node (48) comprising:
communication interface circuitry (90) configured to send and receive messages, including requests and responses related to charging; and
processing circuitry (92) operatively associated with the communication interface circuitry (90) and configured to:
receive a request originating from an edge Charging Function (eCHF) (44), requesting a quota for authorizing consumption by a first user terminal (20) of an edge service provided by the communication network (10), the first user terminal (20) being a member of a defined group of affiliated user terminals;
grant a group quota usable for authorizing consumption of the edge service by members of the defined group, wherein granting the group quota is performed responsive to the charging node (48) determining that the eCHF (44) is operative to decide locally-granted quotas from respective granted group quotas, for user terminals that are connected to the communication network (10) at an edge location associated with the eCHF (44) and are members of respective defined groups; and
send a response intended for the eCHF (44), indicating the granted group quota.

## Patentansprüche

1. Verfahren (700) zur Abrechnungssteuerung für ein Kommunikationsnetzwerk (10), wobei das Verfahren von einem Knoten durchgeführt wird, der als Edge-Abrechnungsfunktion (eCHF) (44) fungiert, und Folgendes umfasst:
Empfangen einer Abrechnungsanforderung von einer Abrechnungsauslösefunktion (CTF) (42), die eine Quote zur Autorisierung des Verbrauchs eines von dem Kommunikationsnetzwerk (10) bereitgestellten Edge-Diensts durch ein erstes Benutzerendgerät (20) anfordert, wobei das erste Benutzerendgerät (20) ein Mitglied einer definierten Gruppe von zugehörigen Benutzerendgeräten ist;
Senden einer entsprechenden Abrechnungsanforderung an einen Abrechnungsknoten (48), der mit dem Kommunikationsnetzwerk (10) assoziiert ist;
Empfangen einer Abrechnungsantwort von dem Abrechnungsknoten (48), wobei die Abrechnungsantwort eine gewährte Gruppenquote angibt, die zur Autorisierung des Verbrauchs des Edge-Diensts durch Mitglieder der definierten Gruppe verwendet werden kann;
Bestimmen als lokal gewährte Quote, welcher Anteil der gewährten Gruppenquote dem ersten Benutzerendgerät (20) gewährt werden soll; und
Senden einer Abrechnungsantwort an die CTF (42) mit der Angabe der lokal gewährten Quote.

2. Verfahren nach Anspruch 1, wobei das Bestimmen, welcher Anteil der gewährten Gruppenquote dem ersten Benutzerendgerät (20) gewährt werden soll, Bestimmen einer Größe der lokal gewährten Quote basierend auf dem Edge-Dienst umfasst, wobei die Größe der lokalgewährten Quote kleiner oder gleich einer Größe der gewährten Gruppenquote ist.

3. Verfahren nach Anspruch 1 oder 2, wobei das Bestimmen, welcher Anteil der gewährten Gruppenquote dem ersten Benutzerendgerät (20) gewährt werden soll, Bestimmen einer Größe der lokal gewährten Quote basierend darauf umfasst, ob ein oder mehrere andere der zugehörigen Benutzerendgeräte an demselben Edge-Standort wie das erste Benutzerendgerät (20) mit dem Kommunikationsnetzwerk (10) verbunden sind, wobei die Größe der lokal gewährten Quote kleiner oder gleich einer Größe der gewährten Gruppenquote ist.

4. Verfahren nach Anspruch 1-3, wobei das Bestimmen, welcher Anteil der gewährten Gruppenquote dem ersten Benutzerendgerät (20) gewährt werden soll, Bestimmen einer Größe der lokal gewährten Quote basierend darauf umfasst, ob eine oder mehrere zeitlich nahe beieinander liegende Abrechnungsanforderungen für andere der verbundenen Benutzerendgeräte an der eCHF (44) für den Edge-Dienst empfangen wurden, wobei die Größe der lokal gewährten Quote kleiner oder gleich einer Größe der gewährten Gruppenquote ist.

5. Verfahren nach einem der Ansprüche 1-4, wobei der Anteil der gewährten Gruppenquote, der als lokal gewährte Quote gewährt wird, einen verbleibenden Teil der gewährten Gruppenquote als verbleibende Gruppenquote belässt, und wobei das Verfahren ferner Bestimmen, welcher Anteil der verbleibenden Gruppenquote einem anderen der zugehörigen Benutzerendgeräte gewährt werden soll, als weitere lokal gewährte Quote in Reaktion darauf umfasst, dass die eCHF (44) eine Abrechnungsanforderung für das andere der zugehörigen Benutzerendgeräte empfängt, die eine Quote zur Autorisierung des Verbrauchs des Edge-Diensts durch das andere der zugehörigen Benutzerendgeräte anfordert.

6. Verfahren nach der Ansprüche 1-5, ferner umfassend Empfangen einer weiteren Abrechnungsanforderung an der eCHF (44) von derselben oder einer anderen CTF (42), wobei die weitere Abrechnungsanforderung eine Quote zur Autorisierung des Verbrauchs des Edge-Diensts durch ein zweites Benutzerendgerät aus der Gruppe von zugehörigen Benutzerendgeräten anfordert, Bestimmen einer weiteren lokal gewährten Quote für das zweite Benutzerendgerät aus einem zu diesem Zeitpunkt verbleibenden Anteil der gewährten Gruppenquote und Senden einer weiteren Abrechnungsantwort an dieselbe oder eine andere CTF (42) mit der Angabe der weiteren lokal gewährten Quote.

7. Verfahren nach der Ansprüche 1-5, ferner umfassend Empfangen einer weiteren Abrechnungsanforderung an der eCHF (44) von derselben oder einer anderen CTF (42), wobei die weitere Abrechnungsanforderung eine Quote zur Autorisierung des Verbrauchs des Edge-Diensts durch ein zweites Benutzerendgerät aus der Gruppe von zugehörigen Benutzerendgeräten anfordert, Bestimmen, dass die gewährte Gruppenquote erschöpft ist oder eine zu diesem Zeitpunkt verbleibende Menge der gewährten Gruppenquote nicht ausreicht, um auf die weitere Abrechnungsanforderung zu reagieren, und dementsprechend Kommunizieren mit dem Abrechnungsknoten (48), um eine weitere Quote von dem Abrechnungsknoten (48) zu erhalten, um den Verbrauch des Edge-Diensts durch das zweite Benutzerendgerät zu autorisieren.

8. Verfahren nach der Ansprüche 1-7, wobei das Senden der entsprechenden Abrechnungsanforderung an den Abrechnungsknoten (48) Senden einer Edge-Abrechnungsanforderung umfasst, die mindestens eines von Folgendem angibt: einen Edge-Standort der eCHF (44) oder, dass die eCHF (44) dazu konfiguriert ist, lokal gewährte Quoten aus entsprechenden gewährten Gruppenquoten zu bestimmen.

9. Verfahren nach der Ansprüche 1-8, wobei das Empfangen der Abrechnungsantwort von dem Abrechnungsknoten (48) Empfangen einer Edge-Abrechnungsantwort umfasst, die die Gruppenzugehörigkeit des ersten Benutzerendgeräts (20) angibt.

10. Knoten, der als Edge-Abrechnungsfunktion (eCHF) (44) für ein Kommunikationsnetzwerk (10) fungiert, wobei der Knoten Folgendes umfasst:
Kommunikationsschnittstellen-Schaltungsanordnung (60), die dazu konfiguriert ist, Nachrichten zu senden und zu empfangen, die Abrechnungsanforderungen und Abrechnungsantworten umfassen; und
Verarbeitungsschaltungsanordnung (62), die mit der Schnittstellenkommunikationsschaltungsanordnung (60) funktionell assoziiert und zu Folgendem konfiguriert ist:
Empfangen einer Abrechnungsanforderung von einer Abrechnungsauslösefunktion (CTF) (42), die eine Quote zur Autorisierung des Verbrauchs eines von dem Kommunikationsnetzwerk (10) bereitgestellten Edge-Diensts durch ein erstes Benutzerendgerät (20) anfordert, wobei das erste Benutzerendgerät (20) ein Mitglied einer definierten Gruppe von zugehörigen Benutzerendgeräten ist;
Senden einer entsprechenden Abrechnungsanforderung an einen Abrechnungsknoten (48), der mit dem Kommunikationsnetzwerk (10) assoziiert ist;
Empfangen einer Abrechnungsantwort von dem Abrechnungsknoten (48), wobei die Abrechnungsantwort eine gewährte Gruppenquote angibt, die zur Autorisierung des Verbrauchs des Edge-Diensts durch die Mitglieder der definierten Gruppe verwendet werden kann;
Bestimmen als lokal gewährte Quote, welcher Anteil der gewährten Gruppenquote dem ersten Benutzerendgerät (20) gewährt werden soll; und
Senden einer Abrechnungsantwort an die CTF (42) mit der Angabe der lokal gewährten Quote.

11. Knoten nach Anspruch 10, wobei die Verarbeitungsschaltungsanordnung (62) dazu konfiguriert ist, durch Bestimmen einer Größe der lokal gewährten Quote in Abhängigkeit von dem Edge-Dienst zu bestimmen, welcher Anteil der gewährten Gruppenquote dem ersten Benutzerendgerät (20) gewährt werden soll, wobei die Größe der lokalgewährten Quote kleiner oder gleich einer Größe der gewährten Gruppenquote ist.

12. Knoten nach Anspruch 10 oder 11, wobei die Verarbeitungsschaltungsanordnung (62) dazu konfiguriert ist, durch Bestimmen einer Größe der lokal gewährten Quote in Abhängigkeit davon, ob ein oder mehrere andere der zugehörigen Benutzerendgeräte an demselben Edge-Standort wie das erste Benutzerendgerät (20) mit dem Kommunikationsnetzwerk (10) verbunden sind, zu bestimmen, welcher Anteil der gewährten Gruppenquote dem ersten Benutzerendgerät (20) gewährt werden soll, wobei die Größe der lokal gewährten Quote kleiner oder gleich einer Größe der gewährten Gruppenquote ist.

13. Verfahren (800) zur Abrechnungssteuerung für ein Kommunikationsnetzwerk (10), wobei das Verfahren von einem Abrechnungsknoten (48) durchgeführt wird, der mit dem Kommunikationsnetzwerk (10) assoziiert ist, und Folgendes umfasst:
Empfangen einer Anforderung, die von einer Edge-Abrechnungsfunktion (eCHF) (44) abgeht und eine Quote zur Autorisierung des Verbrauchs eines von dem Kommunikationsnetzwerk (10) bereitgestellten Edge-Diensts durch ein erstes Benutzerendgerät (20) anfordert, wobei das erste Benutzerendgerät (20) ein Mitglied einer definierten Gruppe von zugehörigen Benutzerendgeräten ist;
Gewähren einer Gruppenquote, die zur Autorisierung des Verbrauchs des Edge-Diensts durch Mitglieder der definierten Gruppe verwendet werden kann, wobei das Gewähren der Gruppenquote in Reaktion darauf durchgeführt wird, dass der Abrechnungsknoten (48) feststellt, dass die eCHF (44) dazu ausgelegt ist, lokal gewährte Quoten aus jeweiligen gewährten Gruppenquoten für Benutzerendgeräte zu bestimmen, die mit dem Kommunikationsnetzwerk (10) an einem Edge-Standort verbunden sind, der mit der eCHF (44) assoziiert ist, und Mitglieder von jeweiligen definierten Gruppen sind; und
Senden einer Antwort, die für die eCHF (44) bestimmt ist und die gewährte Gruppenquote angibt.

14. Verfahren nach Anspruch 13, wobei das Gewähren der Gruppenquote in Reaktion darauf durchgeführt wird, dass der Abrechnungsknoten (48) ferner basierend auf einem Zugriff auf einen Datenspeicher, der Gruppenmitgliedschaften für einzelne Benutzerendgeräte angibt, feststellt, dass das erste Benutzerendgerät (20) zu der definierten Gruppe gehört.

15. Verfahren nach Anspruch 13 oder 14, ferner umfassend Festellen, dass die eCHF (44) dazu ausgelegt ist, lokal gewährte Quoten zu bestimmen, basierend auf der Anforderung, die angibt, dass die eCHF (44) dazu ausgelegt ist, lokal gewährte Quoten zu bestimmen.

16. Verfahren nach der Ansprüche 13-15, wobei die Antwort ferner die definierte Gruppe und die Benutzerendgeräte, die Mitglieder der definierten Gruppe sind, zur Verwendung durch die eCHF (44) bei der lokalen Identifizierung anderer Mitglieder der definierten Gruppe identifiziert, die eine Verbindung mit dem Kommunikationsnetzwerk (10) an dem mit der eCHF (44) assoziierten Edge-Standort herstellen oder damit verbunden sind.

17. Verfahren nach der Ansprüche 13-16, wobei der Abrechnungsknoten (48) eine Kontostandsverwaltungsfunktion (ABMF) umfasst, die eine Bewertungsfunktion (RF), die die gewährte Gruppenquote feststellt, umfasst oder damit kommuniziert.

18. Verfahren nach der Ansprüche 13-17, ferner umfassend Bestimmen einer Größe der gewährten Gruppenquote basierend auf mindestens einem von Folgendem: dem Edge-Dienst oder einer bekannten oder geschätzten Anzahl der zugehörigen Benutzerendgeräte an dem mit der eCHF (44) assoziierten Standort.

19. Abrechnungsknoten (48), der zur Abrechnungssteuerung für ein Kommunikationsnetzwerk (10) konfiguriert ist, wobei der Abrechnungsknoten (48) Folgendes umfasst:
Kommunikationsschnittstellen-Schaltungsanordnung (90), die dazu konfiguriert ist, Nachrichten zu senden und zu empfangen, die Anforderungen und Antworten in Bezug auf Abrechnung umfassen; und
Verarbeitungsschaltungsanordnung (92), die mit der Schnittstellenkommunikationsschaltungsanordnung (90) funktionell assoziiert und zu Folgendem konfiguriert ist:
Empfangen einer Anforderung, die von einer Edge-Abrechnungsfunktion (eCHF) (44) abgeht und eine Quote zur Autorisierung des Verbrauchs eines von dem Kommunikationsnetzwerk (10) bereitgestellten Edge-Diensts durch ein erstes Benutzerendgerät (20) anfordert, wobei das erste Benutzerendgerät (20) ein Mitglied einer definierten Gruppe von zugehörigen Benutzerendgeräten ist;
Gewähren einer Gruppenquote, die zur Autorisierung des Verbrauchs des Edge-Diensts durch Mitglieder der definierten Gruppe verwendet werden kann, wobei das Gewähren der Gruppenquote in Reaktion darauf durchgeführt wird, dass der Abrechnungsknoten (48) feststellt, dass die eCHF (44) dazu ausgelegt ist, lokal gewährte Quoten aus jeweiligen gewährten Gruppenquoten für Benutzerendgeräte zu bestimmen, die mit dem Kommunikationsnetzwerk (10) an einem Edge-Standort verbunden sind, der mit der eCHF (44) assoziiert ist, und Mitglieder von jeweiligen definierten Gruppen sind; und
Senden einer Antwort, die für die eCHF (44) bestimmt ist und die gewährte Gruppenquote angibt.

## Revendications

1. Procédé (700) de commande d'imputation pour un réseau de communication (10), le procédé étant réalisé par un nœud fonctionnel en tant que fonction d'imputation de périphérie (eCHF) (44) et comprenant :
la réception d'une demande d'imputation depuis une fonction de déclenchement d'imputation (CTF) (42), demandant un quota pour autoriser une consommation par un premier terminal utilisateur (20) d'un service de périphérie fourni par le réseau de communication (10), le premier terminal utilisateur (20) étant un membre d'un groupe défini de terminaux utilisateurs affiliés ;
l'envoi d'une demande d'imputation correspondante à un nœud d'imputation (48) associé au réseau de communication (10) ;
la réception d'une réponse d'imputation depuis le nœud d'imputation (48), la réponse d'imputation indiquant un quota de groupe octroyé utilisable pour autoriser une consommation du service de périphérie par des membres du groupe défini ;
la décision, en tant que quota octroyé localement, de la fraction du quota de groupe octroyé à octroyer au premier terminal utilisateur (20) ; et
l'envoi d'une réponse d'imputation à la CTF (42), indiquant le quota octroyé localement.

2. Procédé selon la revendication 1, dans lequel la décision de la fraction du quota de groupe octroyé à octroyer au premier terminal utilisateur (20) comprend la décision d'une taille du quota octroyé localement, sur la base du service de périphérie, la taille du quota octroyé localement étant inférieure ou égale à une taille du quota de groupe octroyé.

3. Procédé selon la revendication 1 ou 2, dans lequel la décision de la fraction du quota de groupe octroyé à octroyer au premier terminal utilisateur (20) comprend la décision d'une taille du quota octroyé localement, selon qu'un ou plusieurs autres des terminaux utilisateurs affiliés sont ou non connectés au réseau de communication (10) au niveau d'un même emplacement de périphérie que le premier terminal utilisateur (20), la taille du quota octroyé localement étant inférieure ou égale à une taille du quota de groupe octroyé.

4. Procédé selon l'une quelconque des revendications 1 à 3, dans lequel la décision de la fraction du quota de groupe octroyé à octroyer au premier terminal utilisateur (20) comprend la décision d'une taille du quota octroyé localement, selon qu'une ou plusieurs demandes d'imputation proches dans le temps ont été reçues ou non au niveau de l'eCHF (44) pour n'importe quel autre des terminaux utilisateurs affiliés, pour le service de périphérie, la taille du quota octroyé localement étant inférieure ou égale à une taille du quota de groupe octroyé.

5. Procédé selon l'une quelconque des revendications 1 à 4, dans lequel la fraction du quota de groupe octroyé qui est octroyée en tant que quota octroyé localement laisse une partie restante du quota de groupe octroyé en tant que quota de groupe restant, et dans lequel le procédé comprend en outre la décision, en tant que quota octroyé localement supplémentaire, de la fraction du quota de groupe restant à octroyer à un autre des terminaux utilisateurs affiliés en réponse au fait que l'eCHF (44) reçoit une demande d'imputation pour l'autre des terminaux utilisateurs affiliés, demandant un quota pour autoriser une consommation par l'autre des terminaux utilisateurs affiliés du service de périphérie.

6. Procédé selon l'une quelconque des revendications 1 à 5, comprenant en outre la réception d'une demande d'imputation supplémentaire au niveau de l'eCHF (44) depuis la même ou une autre CTF (42), la demande d'imputation supplémentaire demandant un quota pour autoriser une consommation du service de périphérie par un deuxième terminal utilisateur parmi le groupe de terminaux utilisateurs affiliés, la décision d'un quota octroyé localement supplémentaire pour le deuxième terminal utilisateur à partir d'une fraction alors restante du quota de groupe octroyé, et l'envoi d'une réponse d'imputation supplémentaire à la même ou une autre CTF (42), indiquant le quota octroyé localement supplémentaire.

7. Procédé selon l'une quelconque des revendications 1 à 5, comprenant en outre la réception d'une demande d'imputation supplémentaire au niveau de l'eCHF (44) depuis la même ou une autre CTF (42), la demande d'imputation supplémentaire demandant un quota pour autoriser une consommation du service de périphérie par un deuxième terminal utilisateur parmi le groupe de terminaux utilisateurs affiliés, la détermination que le quota de groupe octroyé est épuisé ou qu'une quantité alors restante du quota de groupe octroyé n'est pas suffisante pour répondre à la demande d'imputation supplémentaire, et, de manière correspondante, la communication avec le nœud d'imputation (48) pour obtenir un quota supplémentaire à partir du nœud d'imputation (48), pour autoriser une consommation du service de périphérie par le deuxième terminal utilisateur.

8. Procédé selon l'une quelconque des revendications 1 à 7, dans lequel l'envoi de la demande d'imputation correspondante au nœud d'imputation (48) comprend l'envoi d'une demande d'imputation de périphérie qui indique au moins l'un parmi : un emplacement de périphérie de l'eCHF (44), ou que l'eCHF (44) est configurée pour décider de quotas octroyés localement à partir de quotas de groupe octroyés correspondants.

9. Procédé selon l'une quelconque des revendications 1 à 8, dans lequel la réception de la réponse d'imputation depuis le nœud d'imputation (48) comprend la réception d'une réponse d'imputation de périphérie qui indique l'affiliation de groupe du premier terminal utilisateur (20).

10. Nœud fonctionnel en tant que fonction d'imputation de périphérie (eCHF) (44) pour un réseau de communication (10), le nœud comprenant :
une circuiterie d'interface de communication (60) configurée pour envoyer et recevoir des messages incluant des demandes d'imputation et des réponses d'imputation ; et
une circuiterie de traitement (62) associée fonctionnellement à la circuiterie d'interface de communication (60) et configurée pour :
recevoir une demande d'imputation depuis une fonction de déclenchement d'imputation (CTF) (42), demandant un quota pour autoriser une consommation par un premier terminal utilisateur (20) d'un service de périphérie fourni par le réseau de communication (10), le premier terminal utilisateur (20) étant un membre d'un groupe défini de terminaux utilisateurs affiliés ;
envoyer une demande d'imputation correspondante à un nœud d'imputation (48) associé au réseau de communication (10) ;
recevoir une réponse d'imputation depuis le nœud d'imputation (48), la réponse d'imputation indiquant un quota de groupe octroyé utilisable pour autoriser une consommation du service de périphérie par des membres du groupe défini ;
décider, en tant que quota octroyé localement, de la fraction du quota de groupe octroyé à octroyer au premier terminal utilisateur (20) ; et
envoyer une réponse d'imputation à la CTF (42), indiquant le quota octroyé localement.

11. Nœud selon la revendication 10, dans lequel la circuiterie de traitement (62) est configurée pour décider de la fraction du quota de groupe octroyé à octroyer au premier terminal utilisateur (20) par la décision d'une taille du quota octroyé localement, sur la base du service de périphérie, la taille du quota octroyé localement étant inférieure ou égale à une taille du quota de groupe octroyé.

12. Nœud selon la revendication 10 ou 11, dans lequel la circuiterie de traitement (62) est configurée pour décider de la fraction du quota de groupe octroyé à octroyer au premier terminal utilisateur (20) par la décision d'une taille du quota octroyé localement, selon qu'un ou plusieurs autres des terminaux utilisateurs affiliés sont ou non connectés au réseau de communication (10) au niveau d'un même emplacement de périphérie que le premier terminal utilisateur (20), la taille du quota octroyé localement étant inférieure ou égale à une taille du quota de groupe octroyé.

13. Procédé (800) de commande d'imputation pour un réseau de communication (10), le procédé étant réalisé par un nœud d'imputation (48) associé au réseau de communication (10) et comprenant :
la réception d'une demande provenant d'une fonction d'imputation de périphérie (eCHF) (44), demandant un quota pour autoriser une consommation par un premier terminal utilisateur (20) d'un service de périphérie fourni par le réseau de communication (10), le premier terminal utilisateur (20) étant un membre d'un groupe défini de terminaux utilisateurs affiliés ;
l'octroi d'un quota de groupe utilisable pour autoriser une consommation du service de périphérie par des membres du groupe défini, dans lequel l'octroi du quota de groupe est réalisé en réponse au fait que le nœud d'imputation (48) détermine que l'eCHF (44) est fonctionnelle pour décider de quotas octroyés localement à partir de quotas de groupe octroyés respectifs, pour des terminaux utilisateurs qui sont connectés au réseau de communication (10) au niveau d'un emplacement de périphérie associé à l'eCHF (44) et qui sont des membres de groupes définis respectifs ; et
l'envoi d'une réponse destinée à l'eCHF (44), indiquant le quota de groupe octroyé.

14. Procédé selon la revendication 13, dans lequel l'octroi du quota de groupe est réalisé en réponse au fait que le nœud d'imputation (48) détermine en outre que le premier terminal utilisateur (20) appartient au groupe défini, sur la base de l'accès à un magasin de données qui indique des abonnements de groupe pour des terminaux utilisateurs individuels.

15. Procédé selon la revendication 13 ou 14, comprenant en outre la détermination que l'eCHF (44) est fonctionnelle pour décider de quotas octroyés localement sur la base du fait que la demande indique que l'eCHF (44) est fonctionnelle pour décider de quotas octroyés localement.

16. Procédé selon l'une quelconque des revendications 13 à 15, dans lequel la réponse identifie le groupe défini et les terminaux utilisateurs qui sont des membres du groupe défini, pour une utilisation par l'eCHF (44) pour identifier localement d'autres membres du groupe défini qui se connectent, ou qui sont connectés, au réseau de communication (10) au niveau d'un emplacement de périphérie associé à l'eCHF (44).

17. Procédé selon l'une quelconque des revendications 13 à 16, dans lequel le nœud d'imputation (48) comprend une fonction de gestion de solde de compte (ABMF) qui inclut ou communique avec une fonction d'évaluation (RF) qui détermine le quota de groupe octroyé.

18. Procédé selon l'une quelconque des revendications 13 à 17, comprenant en outre la décision d'une taille du quota de groupe octroyé sur la base d'au moins l'un parmi : le service de périphérie, ou un nombre connu ou estimé de terminaux utilisateurs affiliés au niveau d'un emplacement de périphérie associé à l'eCHF (44).

19. Nœud d'imputation (48) configuré pour une commande d'imputation pour un réseau de communication (10), le nœud d'imputation (48) comprenant :
une circuiterie d'interface de communication (90) configurée pour envoyer et recevoir des messages, incluant des demandes et des réponses relatives à l'imputation ; et
une circuiterie de traitement (92) associée fonctionnellement à la circuiterie d'interface de communication (90) et configurée pour :
recevoir une demande provenant d'une fonction d'imputation de périphérie (eCHF) (44), demandant un quota pour autoriser une consommation par un premier terminal utilisateur (20) d'un service de périphérie fourni par le réseau de communication (10), le premier terminal utilisateur (20) étant un membre d'un groupe défini de terminaux utilisateurs affiliés ;
octroyer un quota de groupe utilisable pour autoriser une consommation du service de périphérie par des membres du groupe défini, dans lequel l'octroi du quota de groupe est réalisé en réponse au fait que le nœud d'imputation (48) détermine que l'eCHF (44) est fonctionnelle pour décider de quotas octroyés localement à partir de quotas de groupe octroyés respectifs, pour des terminaux utilisateurs qui sont connectés au réseau de communication (10) au niveau d'un emplacement de périphérie associé à l'eCHF (44) et qui sont des membres de groupes définis respectifs ; et
envoyer une réponse destinée à l'eCHF (44), indiquant le quota de groupe octroyé.
